# EUROPEAN PATENT APPLICATION

(11) **EP 4 793 094 A1**
(43) Date of publication of application: **19.08.2026**
(21) Application number: 24877100.8
(22) Date of filing: 03.10.2024
(51) Int. Cl.: B60Q 1/14

(54) **VEHICLE LAMP, CONTROL DEVICE FOR VARIABLE LIGHT DISTRIBUTION LAMP, AND SOFTWARE PROGRAM**

(30) Priority: 12.10.2023 JP 2023176774
(71) Applicant: Koito Manufacturing Co., Ltd., Shinagawa-ku, Tokyo 141-0001 (JP)
(72) Inventor: KAMIYA, Kyohei, Shizuoka-shi Shizuoka 424-8764 (JP); SAWADA, Hirotaka, Shizuoka-shi Shizuoka 424-8764 (JP)
(74) Representative: Algemeen Octrooi- en Merkenbureau B.V.
(86) International application number: PCT/JP2024/035500
(87) International publication number: WO 2025/079504

(57) **Abstract**

A control device 300 controls a variable light distribution lamp 110. The variable light distribution lamp 110 has a plurality of control pixels PIX whose gradations are independently controllable, and is structured to emit a beam having intensity distribution according to the gradations of the control pixels PIX. An interface circuit 302 is structured to receive, from a host vehicle, vehicle ROI information that indicates an existence range of a vehicle ahead. An arithmetic processor 304 is structured to determine a light distribution pattern PTN in which the illuminance gradates based on a reference region REF, the reference region being a rectangle that encompasses n existence ranges (n ≥ 2) indicated by n pieces of vehicle ROI information that have been most recently received. The control device 300 is structured to control the gradations of the control pixels based on the light distribution pattern PTN.

## Description

### TECHNICAL FIELD

The present disclosure relates to a vehicle lamp apparatus.

### BACKGROUND ART

Vehicle lamp apparatuses are generally designed to be switchable between low beam illumination and high beam illumination. The low beam illumination aims to illuminate a nearby area of a host vehicle with a predetermined illuminance, whose light distribution is regulated by law so as not to cast glare to oncoming car or preceding car, and is mainly used during travel in urban areas. On the other hand, the high beam illumination aims to illuminate a far front area with a relatively high illuminance, and is mainly used during high-speed travel on roads with less traffic of oncoming car or preceding car. The high beam illumination, which is superior to the low beam illumination in terms of visibility by the driver, has however suffered from a problem of casting glare to vehicle driver or pedestrian ahead of the vehicle.

There is a recent proposal on adaptive driving beam (ADB) technology for dynamically and adaptively controlling a high beam light distribution pattern, with reference to surrounding situation of the vehicle. The ADB technology is designed to detect the preceding vehicle and the oncoming vehicle (collectively referred to as vehicle aheads), or the pedestrian ahead of the host vehicle, and to dim an area that corresponds to the vehicles or the pedestrian, thereby reducing glare possibly given to the vehicles or the pedestrian.

### RELATED-ART LITERATURE

### PATENT LITERATURE

Patent Literature 1: WO 2021/182151 A1
Patent Literature 2: WO 2021/200701 A1

### SUMMARY OF INVENTION

### TECHNICAL PROBLEM

The ADB control has been advanced towards higher resolution, with use of an LED array, or a spatial light modulator such as DMD or liquid crystal device. The high-resolution ADB control is designed to detect the vehicle ahead with use of a camera or a sensor such as LiDAR, to control a shading range.

More specifically, information regarding a range in which the vehicle ahead is present (referred to as vehicle region of interest (ROI) information) is created with reference to a sensor output. For example, the vehicle ROI information may contain angle information that indicates the left end of the vehicle body of the vehicle ahead, and angle information that indicates the right end of the same for the horizontal direction, and may contain angle information that indicates the top end of the vehicle body, and angle information that indicates the bottom end of the same for the vertical direction. An ADB headlamp creates light distribution that contains a light-shielding portion, based on the vehicle ROI information.

The present inventors have examined light distribution (also referred to as blurred light distribution, hereinafter) in which the light-shielding portion has gradated illuminance at the contour. The blurred light distribution is useful for reducing discomfort in many travel scenes.

There may be a case where the accuracy of detecting the existence range of the vehicle ahead may be degraded on the vehicle side. More specifically, there occurs an event that the existence range of the vehicle ahead indicated by the vehicle ROI information trembles. In this case, creation of the light distribution on the basis of the vehicle ROI information will cause trembling of the light-shielding portion with blurred contour, thus giving discomfort on the contrary.

The present disclosure has been arrived at in consideration of such circumstances, and one exemplary purpose thereof is to provide a vehicle lamp apparatus capable of reducing discomfort ascribed to the ADB control.

### SOLUTION TO PROBLEM

One aspect of the present disclosure relates to a control device structured to control a variable light distribution lamp. The variable light distribution lamp has a plurality of control pixels whose gradations are independently controllable, and is structured to emit a beam having intensity distribution according to the gradations of the control pixels. The control device has: an interface circuit structured to receive, from a host vehicle, light-shielding information that indicates an existence range of a vehicle ahead; and an arithmetic processing unit configured to determine a light distribution pattern in which illuminance gradually changes based on a reference region, the reference region being a rectangle that encompasses n existence ranges (n ≥ 2) indicated by n pieces of light-shielding information that have been most recently received. The control device is structured to control the gradations of the plurality of control pixels based on the light distribution pattern.

Another aspect of the present disclosure relates to a vehicle lamp apparatus. The vehicle lamp apparatus has: a variable light distribution lamp having a plurality of control pixels whose gradations are independently controllable, and is structured to emit a beam having intensity distribution according to the gradations of the control pixels; and a control device structured to receive, from a host vehicle, light-shielding information that indicates an existence range of a vehicle ahead, and to control the variable light distribution lamp based on the light-shielding information. The control device is structured to control the gradations of the plurality of control pixels of the variable light distribution lamp such that illuminance gradates based on a reference region, the reference region being a rectangle that encompasses n existence ranges (n ≥ 2) indicated by n pieces of light-shielding information that have been most recently received.

Yet another aspect of the present disclosure relates to a control device structured to control a variable light distribution lamp. The variable light distribution lamp has a plurality of control pixels whose gradations are independently controllable, and is structured to emit a beam having intensity distribution according to the gradations of the control pixels. The control device is structured to control the variable light distribution lamp such that, when a light spot moves in a horizontal direction, a horizontal width of a light-shielding portion expands while following the light spot in the horizontal direction, and a light distribution is formed in which illuminance gradates around the light-shielding portion.

Note that also free combinations of these constituents, and also any of the constituents and expressions exchanged among the method, apparatus, and system and so forth, are valid as the aspects of the present invention or the present disclosure. Also note that the description of this section (SOLUTION TO PROBLEM) does not describe all essential features of the invention, and also subcombinations of these features described may therefore constitute the invention.

### ADVANTAGEOUS EFFECTS OF INVENTION

One aspect of the present disclosure can reduce the discomfort in the ADB control.

### BRIEF DESCRIPTION OF DRAWINGS

[FIG. 1] FIG. 1 is a block diagram illustrating a lamp system according to an embodiment.
[FIG. 2] FIG. 2 is a drawing illustrating formation of a low beam light distribution by the lamp system illustrated in FIG. 1.
[FIG. 3] FIG. 3 is a drawing for explaining a vehicle ROI.
[FIG. 4] FIG. 4 is a drawing for explaining a plurality of pieces of vehicle ROI information and a reference region.
[FIG. 5] FIG. 5 is a drawing illustrating a relationship between a reference region and a light distribution pattern.
[FIG. 6] FIG. 6 is a drawing for explaining an operation of the vehicle lamp apparatus.
[FIG. 7] FIG. 7 is a block diagram of a microcontroller.
[FIG. 8] FIG. 8 is a drawing explaining creation of a control image by a control device.
[FIG. 9] FIG. 9 is a functional block diagram of the control device.
[FIG. 10] FIG. 10 is a drawing illustrating a light distribution pattern according to Modified Example 1.

### DESCRIPTION OF EMBODIMENTS

### (Outline of Embodiments)

Some exemplary embodiments of the present disclosure will be outlined. This outline is intended for briefing some concepts of one or more embodiments, for the purpose of basic understanding of the embodiments, as an introduction before detailed description that follows, without limiting the scope of the invention or disclosure. Also note this outline is not an extensive overview of all possible embodiments, and is therefore not intended to limit any constituent indispensable for the embodiments. For convenience, the term "one embodiment" may be used to designate a single embodiment (Example or Modified Example), or a plurality of embodiments (Examples or Modified Examples) disclosed in the present specification.

The control device according to one embodiment is structured to control a variable light distribution lamp. The variable light distribution lamp has a plurality of control pixels whose gradations are independently controllable, and is structured to emit a beam having intensity distribution according to the gradations of the control pixels. The control device has: an interface circuit structured to receive, from a host vehicle, light-shielding information that indicates an existence range of a vehicle ahead; and an arithmetic processing unit configured to determine a light distribution pattern in which illuminance gradually changes based on a reference region, the reference region being a rectangle that encompasses n existence ranges (n ≥ 2) indicated by n pieces of light-shielding information that have been most recently received. The control device is structured to control the gradations of the plurality of control pixels based on the light distribution pattern.

This structure can prevent the blurred contour of the light-shielding portion from trembling even in a case where the existence range of the vehicle ahead trembles, and can therefore reduce the discomfort.

In one embodiment, the arithmetic processor may be structured to acquire: a leftmost coordinate x_{LEFT} among the n existence ranges; a rightmost coordinate x_{RIGHT} among the n existence ranges; a bottommost coordinate y_{BOTTOM} among the n existence ranges; and a topmost coordinate y_{TOP} among the n existence ranges, and to generate the reference region having vertices at: (x_{LEFT}, y_{BOTTOM}), (x_{LEFT}, y_{TOP}), (x_{RIGHT}, y_{BOTTOM}), and (x_{RIGHT}, y_{TOP}).

In one embodiment, in the light distribution pattern, illuminance outside the reference region may be 100%, illuminance inside an inner offset region offset inward from the reference region may be 0%, and the illuminance may gradate between the reference region and the inner offset region.

In one embodiment, the light distribution pattern may have an illuminance of 0% inside the reference region, an illuminance of 100% outside an outer offset area that offsets outwards from the reference region, with the illuminance gradated between the reference region and the outer offset area.

A vehicle lamp apparatus according to one embodiment has: a variable light distribution lamp having a plurality of control pixels whose gradations are independently controllable, and is structured to emit a beam having intensity distribution according to the gradations of the control pixels; and a control device structured to receive, from a host vehicle, light-shielding information that indicates an existence range of a vehicle ahead, and to control the variable light distribution lamp based on the light-shielding information. The control device is structured to control the gradations of the plurality of control pixels of the variable light distribution lamp such that illuminance gradates based on a reference region, the reference region being a rectangle that encompasses n existence ranges (n ≥ 2) indicated by n pieces of light-shielding information that have been most recently received.

The control device according to one embodiment is structured to control the variable light distribution lamp. The variable light distribution lamp has a plurality of control pixels whose gradations are independently controllable, and is structured to emit a beam having intensity distribution according to the gradations of the control pixels. The control device is structured to control the variable light distribution lamp such that, when a light spot moves in a horizontal direction, a horizontal width of a light-shielding portion expands while following the light spot in the horizontal direction, and a light distribution is formed in which illuminance gradates around the light-shielding portion.

### (Embodiments)

Preferred embodiments will be explained below, referring to the attached drawings. All similar or equivalent constituents, members and processes illustrated in the individual drawings will be given same reference signs, so as to properly avoid redundant explanations. The embodiments are merely illustrative, and are not restrictive about the disclosure. All features and combinations thereof described in the embodiments are not always essential to the disclosure.

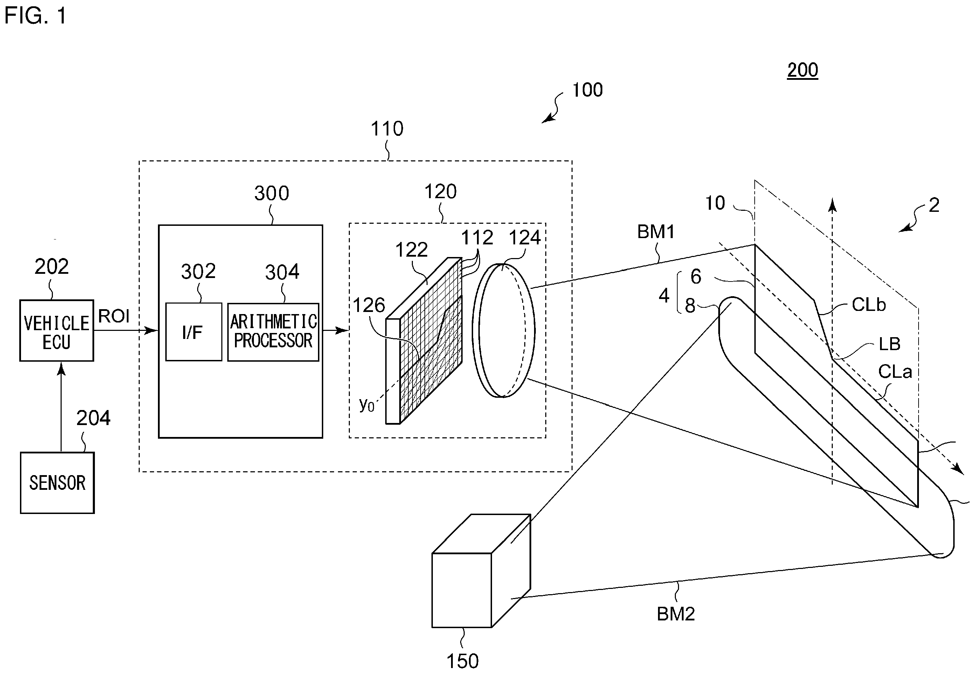

FIG. 1 is a block diagram illustrating a lamp system 200 according to one embodiment. The lamp system 200 functions as a headlamp that is mounted on an automobile, and illuminates a field of view ahead of the vehicle. The lamp system 200 has an ADB function designed to shade, in a high beam mode, an area where an oncoming car and a preceding car (collectively referred to as vehicle ahead, hereinafter) are present, according to the situation ahead of the vehicle.

The lamp system 200 has a vehicle lamp apparatus 100, a vehicle ECU 202, and a sensor 204. The sensor 204 is typically a camera or LiDAR, structured to sense a situation ahead of the vehicle. The vehicle electronic control unit (ECU) 202 is structured to detect the vehicle ahead based on an output from the sensor 204, and to generate vehicle ROI information that indicates an existence range of the vehicle ahead, in other words, an area to be shaded.

In one example, the sensor 204 is given by a camera. The vehicle ECU 202 can detect a light spot that corresponds to a head lamp or a rear lamp of the vehicle ahead from a camera image, and can detect an existence range of the vehicle ahead based on the light spot.

In one example, the vehicle ROI information may contain a left end position x_{LEFT}, a right end position x_{RIGHT}, a top end position y_{TOP}, and a bottom end position y_{BOTTOM} of the existence range of the vehicle ahead (light-shielding portion). Location information is usually given by angle.

Alternatively in one example, the vehicle ROI information may contain either the left end position x_{LEFT} or the right end position x_{RIGHT} of the existence range of the vehicle ahead (light-shielding portion), width Δx of the existence range, either the top end position y_{TOP} or the bottom end position y_{BOTTOM} of the existence range, and height Δy of the existence range.

The vehicle ROI information is transmitted from the vehicle ECU 202, through a vehicle bus such as control device area network (CAN) or local interconnect network (LIN), to the vehicle lamp apparatus 100. The vehicle lamp apparatus 100, during high beam illumination, causes the ADB control with use of the vehicle ROI information.

The vehicle lamp apparatus 100 has a variable light distribution lamp 110 and a fixed light distribution lamp 150, and is therefore switchable between high beam illumination and low beam illumination, depending on combination of these two lamps.

The variable light distribution lamp 110 and the fixed light distribution lamp 150 illuminate different ranges. FIG. 1 schematically illustrates a virtual perpendicular screen 2, on which a low beam light distribution 4 is schematically illustrated. More specifically, the variable light distribution lamp 110 covers a rectangular area 10 indicated by an alternate long and short dash line. The rectangular area 10 corresponds to an area in which the high beam light distribution is to be formed. Of the low beam light distribution, a first area 6, which is an upper part containing a cutoff line CL, is contained in the rectangular area 10. The cutoff line CL contains a horizontal cutoff line CLa and an oblique cutoff line CLb, which intersect at an elbow point LB.

On the other hand, the fixed light distribution lamp 150 illuminates a second area 8 that contains a bottom end part of the low beam light distribution 4, with a second beam BM2. The second area 8 is referred to as diffused low beam light distribution. The first area 6 and the second area 8 are overlapped.

The variable light distribution lamp 110 has a high-definition lamp unit 120 and a control device 300. The high-definition lamp unit 120 contains a light-emitting element array 122 and an illumination optical system 124. The light-emitting element array 122 contains a plurality of control pixels PIX arranged in a matrix. Gradation of each control pixel PIX is independently controllable. The light emitting element array 122 usable herein may be an LED array, for which the gradation can be correlated to luminance of light emission. The beam emitted from the variable light distribution lamp 110 has an intensity distribution that corresponds to the gradations of the plurality of control pixels PIX.

The control device 300 controls the gradations of the plurality of control pixels PIX of the light emitting element array 122, so that light distribution suitable for travel scene will be obtainable. The illumination optical system 124 projects output light from the light-emitting element array 122, ahead of the vehicle. The illumination optical system 124 may be a lens optical system, a reflective optical system, or a combination of these systems.

Note that correspondence between a position of a certain control pixel PIX and an illumination area on the virtual perpendicular screen 2 ascribed to the pixel is determined by the illumination optical system 124, which may be occasionally given in a mirror image relation (left-right inversion), up-down inversion, or up-down and left-right inversion.

In the low beam mode, the control device 300 controls on/off of the plurality of control pixels PIX in the light-emitting element array 122, so that the first area 6 below the cutoff line CL, out of the first area 6, is illuminated on the virtual perpendicular screen 2. More specifically, the control device 300 turns on the control pixels PIX below (or above) a line 126 that corresponds to the cutoff line, and turns off the control pixels PIX above (or below) the line. ON of the control pixel PIX means that the gradation is non-zero, meanwhile OFF of control pixel PIX means that the gradation is zero.

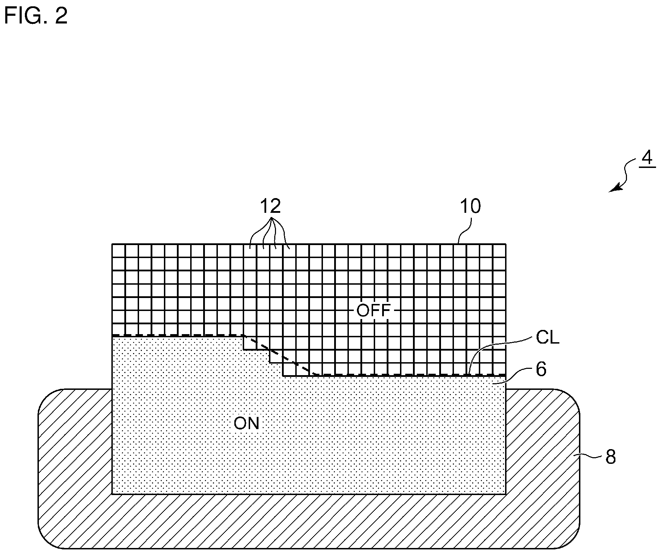

FIG. 2 is a drawing for explaining formation of the low beam light distribution 4 by the lamp system 200 illustrated in FIG. 1. A rectangle indicates the illuminable range 10 by the variable light distribution lamp 110. The illuminable range 10 is divided into a plurality of control areas (also referred to as meshes) 12 that correspond to the plurality of control pixels PIX. Illuminance of each mesh 12 is ascribed to the gradation of the corresponding control pixel PIX.

With all the control pixels PIX of the light-emitting element array 122 turned on, all the control areas 12 in the illuminable range 10 are illuminated with a first beam BM1. With a part of the control pixels PIX of the light-emitting element array 122 turned off, the illuminance of the control area 12 that corresponds to such control pixel will be substantially zero. Note that the control pixel PIX being turned off is not limited to a case where the illuminance is zero, that is, a case where the illuminance of the corresponding control area 12 is zero, but may encompass a case where the illuminance is very small, that is, a case where the illuminance of the corresponding control area 12 is not zero but is very small.

The control device 300 turns off the control pixels PIX that correspond to the control areas 12 above the cutoff line CL, meanwhile turns on the control pixels PIX that correspond to the control areas 12 below the cutoff line CL, to form the first area 6 that contains the cutoff line CL, out of the low beam light distribution 4.

Note that the illuminance of the first area 6 below the cutoff line CL may have a certain distribution, rather than being uniform.

Returning now back to FIG. 1, the light distribution control in the high beam mode will be described.

The control device 300 has an interface circuit 302 and an arithmetic processor 304. The interface circuit 302 and the arithmetic processor 304 may be implemented as separate hardware, or as a single hardware. The interface circuit 302 receives the vehicle ROI information from the vehicle ECU 202. For example, the interface circuit 302 is given by a CAN interface. The vehicle ROI information is transmitted from the vehicle ECU 202 to the arithmetic processor 304, at a predetermined cycle. For example, the cycle spans 16.6 ms (that is, 60 fps).

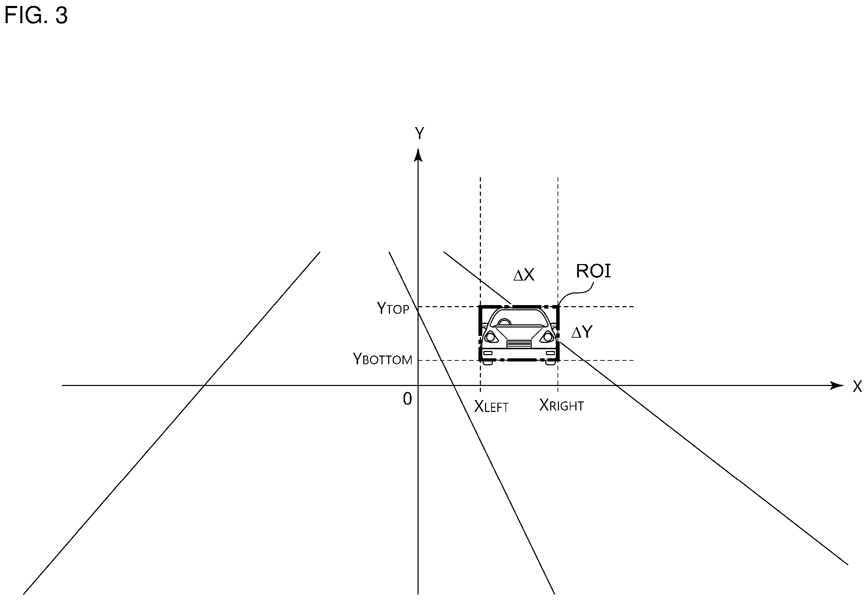

FIG. 3 is a drawing for explaining the vehicle ROI. This travel scene illustrates passing of an oncoming car. The vehicle ECU 202 detects a part where the vehicle body of the oncoming car is present, as the ROI. The vehicle ROI information may contain a left end coordinate X_{LEFT}, a right end coordinate X_{RIGHT}, a top end coordinate Y_{TOP}, and a bottom end coordinate Y_{BOTTOM} of the vehicle ahead.

Alternatively, the vehicle ROI information may contain either the left end coordinate X_{LEFT} or the right end coordinate X_{RIGHT} of the vehicle ahead; lateral width Δx of the vehicle ahead; either the top end coordinate Y_{TOP} or the bottom end coordinate Y_{BOTTOM} of the vehicle ahead; and the lateral height Δy of the vehicle ahead.

Refer now back to FIG. 1. The arithmetic processor 304 determines the light distribution, according not only to the latest one piece of vehicle ROI information, but also to the latest predetermined n (n ≥ 2) pieces of vehicle ROI information. More specifically, the arithmetic processor 304 creates a rectangular reference region REF just accommodating n existence ranges indicated by the latest n pieces of vehicle ROI information. For example, n may be 5 to 25, and may more preferably be approximately 10 to 20.

The arithmetic processor 304 then determines a light distribution pattern in which the illuminance gradates, in other words, a light distribution pattern with a blurred contour, based on the reference region REF. The luminance of the plurality of control pixels PIX of the variable light distribution lamp 110 is controlled, according to the light distribution pattern.

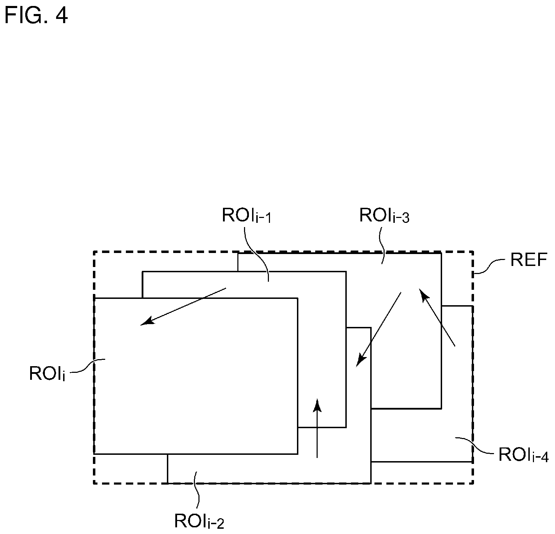

FIG. 4 is a drawing for explaining a plurality of pieces of vehicle ROI information and the reference region REF. In this case with n = 5, ROIᵢ indicates the latest existence range, and ROIᵢ₋ⱼ indicates the existence range j times before (j < n). The reference region REF is a rectangle just accommodating n existence ranges ROI.

The arithmetic processor 304 may acquire:
- a leftmost coordinate x_{LEFT_MOST} among the n existence ranges;
- a rightmost coordinate x_{RIGHT_MOST} among the n existence ranges;
- a bottommost coordinate y_{BOTTOM_MOST} among the n existence ranges; and
- a topmost coordinate y_{TOP_MOST} among the n existence ranges.
A rectangle having vertices at four coordinates of
(x_{LEFT_MOST}, y_{BOTTOM_MOST}),
(x_{LEFT_MOST}, y_{TOP_MOST}),
(x_{RIGHT_MOST}, y_{BOTTOM_MOST}), and
(x_{RIGHT_MOST}, y_{TOP_MOST})
may therefore be used as the reference region REF.

For example, assume the positive direction of the x coordinate rightwards, and the positive direction of the y coordinate upwards. In this case, the arithmetic processor 304 can determine a minimum value of the left end positions x_{LEFT} of the individual n existence ranges, as x_{LEFT_MOST}. The processor can also determine a maximum value of the right end positions x_{RIGHT} of the individual n existence ranges, as x_{RIGHT_MOST}. The processor can also determine a maximum value of the top end positions y_{TOP} of the individual n existence ranges, as y_{TOP_MOST}. The processor can also determine a minimum value of the bottom end positions y_{BOTTOM} of the individual n existence ranges, as y_{BOTTOM_MOST}.

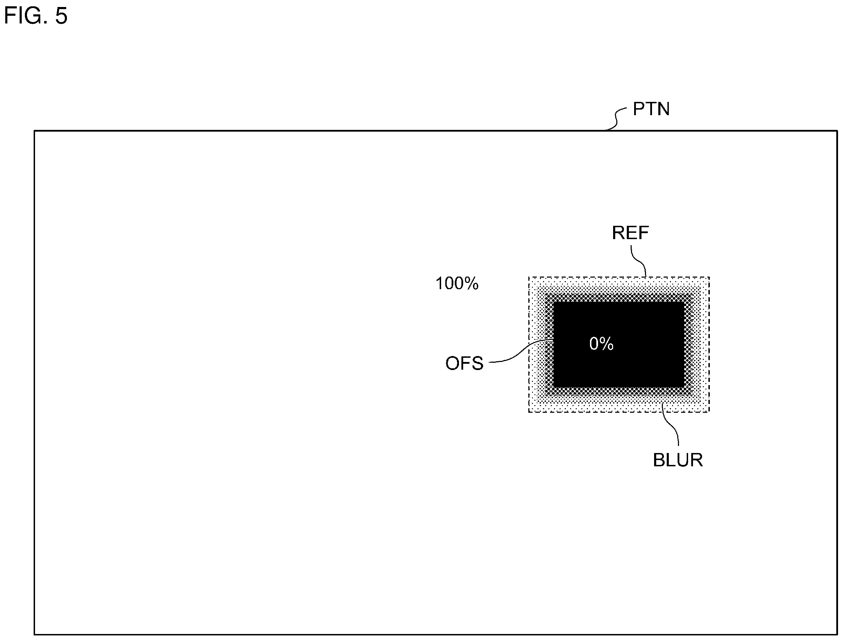

FIG. 5 is a drawing illustrating a relationship between the reference region REF and the light distribution pattern PTN. The drawing schematically depicts brightness with hatching, wherein the more whitish the higher the illuminance, meanwhile the more blackish the lower the illuminance.

In this example, the outside of the reference region REF has an illuminance of 100%. A rectangular inner offset area OFS which is one size smaller is determined inside the reference region REF so as to be offset inwards. The inside of the inner offset area OFS will have an illuminance of 0%. The illuminance between the reference region REF and the inner offset area OFS gradates from 100% to 0%. A range between the reference region REF and the inner offset area OFS, over which the illuminance gradates, is referred to as a blurred area. Width of the blurred area, in terms of angle, may be approximately 1.0° to 3.0°.

The structure of the vehicle lamp apparatus 100 has been described above. Next, operations of the vehicle lamp apparatus 100 will be explained.

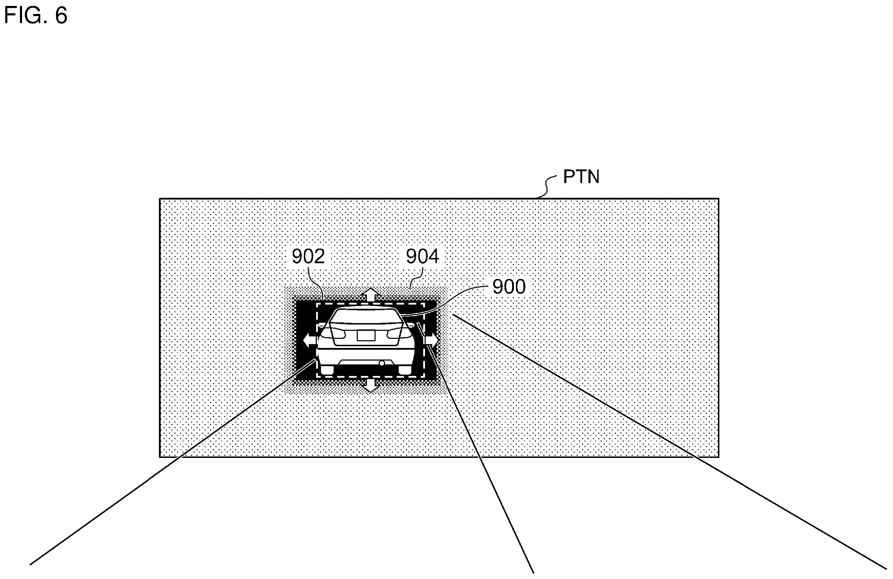

FIG. 6 is a drawing for explaining an operation of the vehicle lamp apparatus 100. An on-vehicle ECU generates vehicle ROI information that indicates the existence range 902 of an oncoming car 900, based on a sensor output. In a case where the host vehicle tracks the oncoming car 900 at the same speed on a straight road, the existence range 902 indicated by the vehicle ROI information will be stationary in an ideal sense. The existence range 902 may, however, occasionally tremble up and down, and left and right, as indicated by arrows in the drawing, due to a problem ascribed to detection accuracy of the on-vehicle ECU.

Advantages of the vehicle lamp apparatus 100 according to the embodiment will be clarified by comparison with a comparative technique. The comparative technique forms the light-shielding portion, based on the existence range 902 indicated by the latest vehicle ROI information. Hence tremble of the existence range 902 accordingly causes tremble of the blurred light-shielding portion. Tremble of the blurred light-shielding portion will make the driver feel strong discomfort.

In contrast in the vehicle lamp apparatus 100 according to the embodiment, the reference region is created so as to accommodate the trembling existence ranges 902, and the light-shielding portion 904 is formed based on the reference region. The blurred light-shielding portion 904 can therefore be suppressed from trembling, thereby reducing the discomfort given to the driver.

Assume now the vehicle ROI information is generated based on the light spot that corresponds to a head lamp or a rear lamp of the vehicle ahead. The control device 300 controls the variable light distribution lamp 110, upon horizontal shifting of a light spot ahead of the vehicle lamp apparatus 100, so as to widen the lateral width of the light-shielding portion following the light spot, and so as to create light distribution having the illuminance gradated around the circumference of the light-shielding portion. The faster the light spot shifts, the wider the lateral width of the light-shielding portion will be.

Meanwhile, the control device 300 controls the variable light distribution lamp 110, upon vertical shifting of a light spot ahead of the vehicle lamp apparatus 100, so as to expand the height of the light-shielding portion following the light spot, and so as to create light distribution having the illuminance gradated around the circumference of the light-shielding portion. The faster the light spot shifts, the larger the height of the light-shielding portion will be.

The control device 300 controls the variable light distribution lamp 110, upon horizontal trembling of a light spot ahead of the vehicle lamp apparatus 100, so as to widen the width of the light-shielding portion according to the width of trembling (amplitude), and so as to create light distribution having the illuminance gradated around the circumference of the light-shielding portion.

Meanwhile, the control device 300 controls the variable light distribution lamp 110, upon vertical shifting of a light spot ahead of the vehicle lamp apparatus 100, so as to expand the height of the light-shielding portion according to the width of trembling (amplitude), and so as to create light distribution having the illuminance gradated around the circumference of the light-shielding portion.

Next, a specific exemplary configuration and the like of the vehicle lamp apparatus 100 will be described.

In one embodiment, the arithmetic processor 304 may be implemented by a combination of a software program, and a processor on which the software program is run. The processor may be a central processing unit (CPU), or a microcontroller.

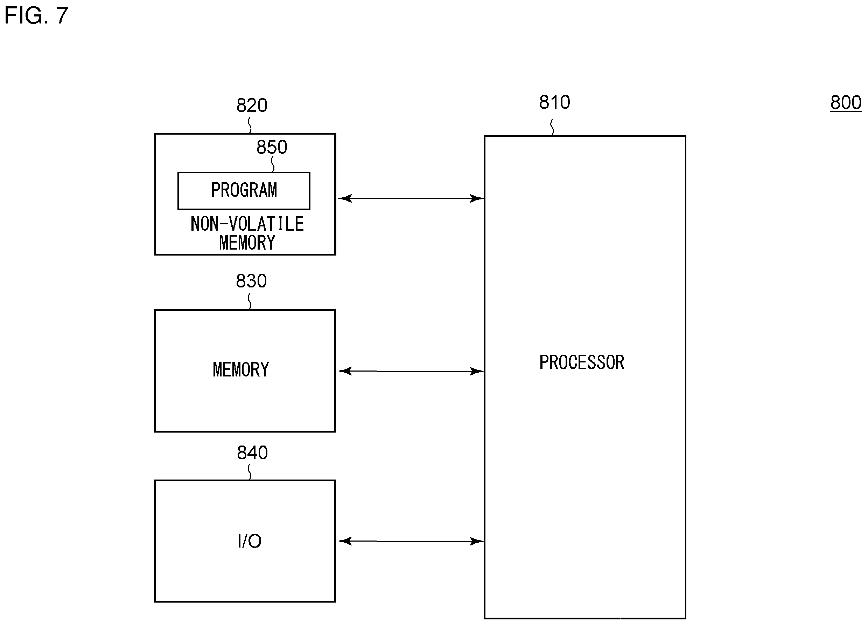

FIG. 7 is a functional block diagram of a microcontroller. A microcontroller 800 has a processor 810, a nonvolatile memory 820, a memory 830, and an interface circuit 840. The non-volatile memory 820 is given by a flash memory, which is a storage medium structured to store the software program 850 run on the processor 810. Upon start-up, the processor 810 loads the software program 850 into the memory 830, and executes instructions of the software program 850. The interface circuit 840 can contain an universal asynchronous receiver and transmitter (UART); serial interface such as three-wire serial interface or I2C bus interface; CAN interface; GPIO; or A/D converter or D/A converter. The microcontroller 800 may have the component built in a single IC package. Alternatively, several IC packages may be mounted on a printed circuit board to constitute a microcomputer board.

The software program 850 causes the processor 810 to execute the following processes:
- process for storing vehicle ROI information that indicates the existence range of the vehicle ahead into a memory;
- process for creating a rectangular reference region REF that accommodates n existence ranges indicated by latest predetermined n (n ≥ 2) pieces of light-shielding information, every time the light-shielding information is received;
- process for creating a light distribution pattern PTN having the illuminance gradated based on the reference region REF; and
- process for controlling the gradations of the plurality of control pixels PIX of the variable light distribution lamp 110 so as to form the light distribution pattern PTN.

In order to control the plurality of control pixels PIX of the variable light distribution lamp 110, the control device 300 creates a control image IMG1 that defines pixel values of the plurality of control pixels PIX.

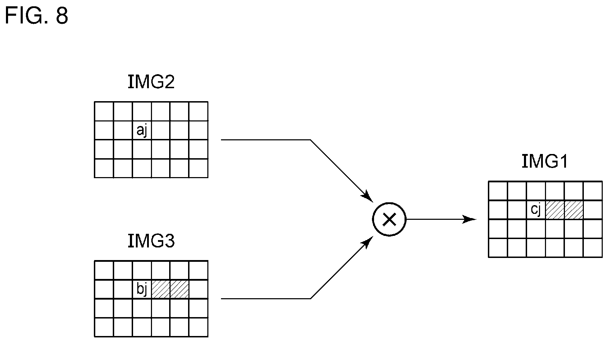

FIG. 8 is a drawing explaining creation of the control image IMG1 by the control device 300. The control device 300 creates the control image IMG1, by multiplying corresponding pixel values in a reference image IMG2 and in a scaled image IMG3. Assuming now a pixel value of a certain pixel of the reference image IMG2 as aⱼ, a pixel value of a corresponding pixel of the scaled image IMG3 as bⱼ, and a pixel value of a corresponding pixel of the control image IMG1 as cⱼ, then ${c}_{j} = {a}_{j} \times {b}_{j}$ holds.

The reference image IMG2 specifies an illuminance distribution of a basic light distribution in the absence of the light-shielding portion. In other words, the reference image IMG2 defines a pixel value "a" of the plurality of control pixels PIX in the absence of the light-shielding portion.

The scaled image IMG3 contains a plurality of pixels having pixel values b of 0 to 1. The pixel value 0 corresponds to an illuminance of 0%, and the pixel value 1 corresponds to an illuminance of 100%. The scaled image IMG3 has a pixel value of 1 outside the reference region REF, a pixel value of 0 inside the inner offset area OFS, and pixel values gradated between 0 and 1 in the blurred area BLUR.

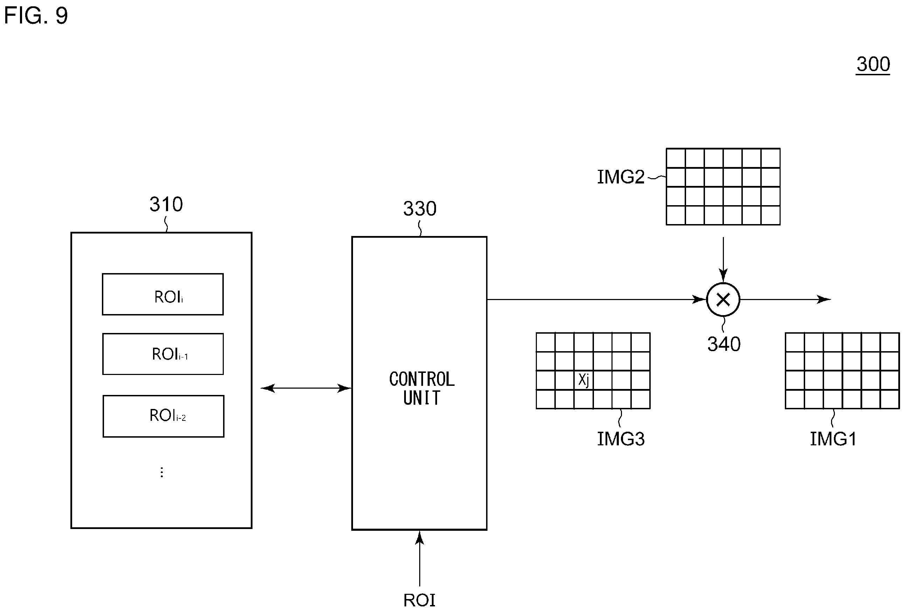

FIG. 9 is a functional block diagram of the control device 300. The control device 300 may be implemented by a microcontroller that contains a processor on which a software program can run. The block diagram in FIG. 9 therefore illustrates functions implemented by the program, rather than a hardware configuration of the control device 300, in other words, processes that the program causes the processor to execute, as well as data described in the program.

The control device 300 has a memory 310, a control unit 330, and a multiplier 340.

The control unit 330 stores the vehicle ROI information received over the latest n times, in the memory 310.

The control unit 330 creates the reference region REF based on the vehicle ROI information having been stored in the memory 310, and creates the scaled image IMG3.

The multiplier 340 creates the control image IMG1, by multiplying corresponding pixel values in the reference image IMG2, and in the scaled image IMG3.

It is to be understood by those skilled in the art that the aforementioned embodiments are merely illustrative, and that various modified examples are acceptable for combinations of the individual constituents or processes. Such modified examples will be explained below.

### (Modified Example 1)

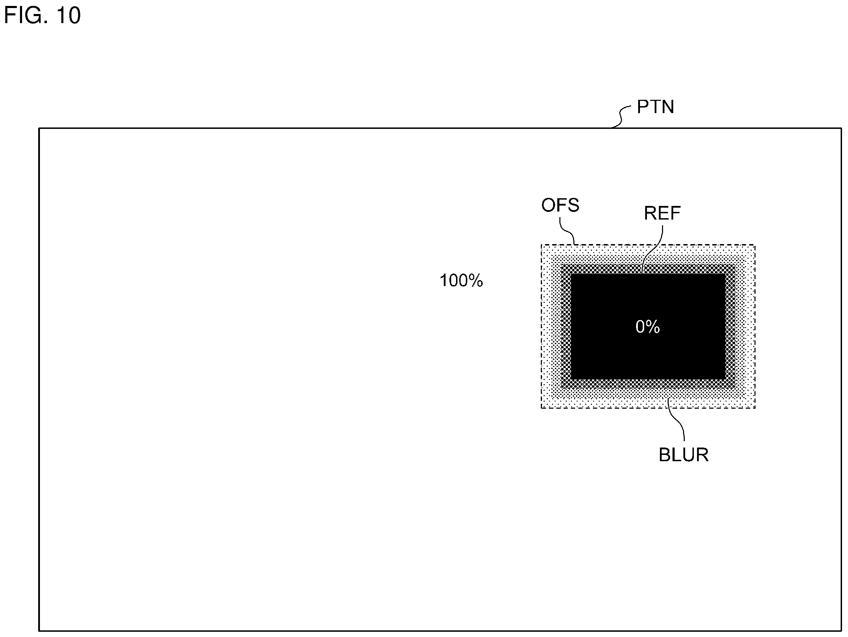

FIG. 10 is a drawing illustrating a light distribution pattern PTN according to Modified Example 1. In Modified Example 1, the inside of the reference region REF will have an illuminance of 0%. Furthermore, an outer offset area OFS is determined so as to be offset outwards from the reference region REF, wherein the outside of the outer offset area OFS will have an illuminance of 100%. An area between the reference region REF and the outer offset area OFS will be given as a blurred area BLUR where the illuminance gradates from 100% to 0%.

### (Modified Example 2)

In Modified Example 2, both the outer offset area which is offset outwards from the reference region REF, and the inner offset area which is offset inwards from the reference region REF are determined. The outside of the outer offset area will have an illuminance of 100%, meanwhile the inside of the inner offset area will have an illuminance of 0%. An area between the inner offset area and the outer offset area will be given as a blurred area BLUR where the illuminance gradates from 100% to 0%.

### (Modified Example 3)

Although the embodiment has described the reference region REF which was given by a rectangle just accommodating the plurality of existence ranges of the vehicle, the present disclosure is not limited thereto. The reference region REF may be determined to accommodate a plurality of existence ranges of the vehicle while keeping a margin in between.

### (Modified Example 4)

Although the embodiment has described the variable light distribution lamp 110 as an LED array, the present disclosure is not limited thereto. For example, the variable light distribution lamp 110 may alternatively be given by a combination of a light source, and a spatial light modulator structured to pattern the light emitted from the light source. For example, the spatial light modulator usable herein may be a digital micromirror device (DMD), a liquid crystal device, or the like.

### (Modified Example 5)

Although the embodiment has described a case where the control device 300 was implemented by a microcontroller, the control device 300 may alternatively be implemented by a field programmable gate array (FPGA), or an application specific integrated circuit (ASIC).

Having described the embodiments according to the present disclosure with use of specific terms, the description is merely illustrative for better understanding, and by no means limits the disclosure or the claims. The scope of the present invention is defined by the claims, and therefore encompasses any embodiments, Examples, and Modified Examples having not been described above.

### INDUSTRIAL APPLICABILITY

The present disclosure relates to a vehicle lamp apparatus.

### REFERENCE SIGNS LIST

200 lamp system, 202 vehicle ECU, 204 sensor, 100 vehicle lamp apparatus, 110 variable light distribution lamp, 120 high-definition lamp unit, 122 light emitting element array, 124 illumination optical system, 150 fixed light distribution lamp, 300 control device, 302 interface circuit, 304 arithmetic processor, 900 oncoming car, 902 existence range, BM1 first beam, BM2 second beam, 6 first area, 8 second area, 2 virtual perpendicular screen

## Claims

1. A control device for controlling a variable light distribution lamp,
the variable light distribution lamp having a plurality of control pixels whose gradations are independently controllable, and being structured to emit a beam having intensity distribution according to the gradations of the control pixels,
the control device comprising:
an interface circuit structured to receive, from a host vehicle, light-shielding information that indicates an existence range of a vehicle ahead; and
an arithmetic processing unit configured to determine a light distribution pattern in which illuminance gradually changes based on a reference region, the reference region being a rectangle that encompasses n existence ranges (n ≥ 2) indicated by n pieces of light-shielding information that have been most recently received,
wherein the control device is structured to control the gradations of the plurality of control pixels based on the light distribution pattern.

2. The control device according to claim 1, wherein the arithmetic processor is structured to acquire:
a leftmost coordinate x_{LEFT} among the n existence ranges;
a rightmost coordinate x_{RIGHT} among the n existence ranges;
a bottommost coordinate y_{BOTTOM} among the n existence ranges; and
a topmost coordinate y_{TOP} among the n existence ranges, and
to generate the reference region having vertices at:
(x_{LEFT}, y_{BOTTOM}),
(x_{LEFT}, y_{TOP}),
(x_{RIGHT}, y_{BOTTOM}), and
(x_{RIGHT}, y_{TOP}).

3. The control device according to claim 1 or 2, wherein, in the light distribution pattern, illuminance outside the reference region is 100%, illuminance inside an inner offset region offset inward from the reference region is 0%, and the illuminance gradates between the reference region and the inner offset region.

4. A vehicle lamp apparatus comprising:
a variable light distribution lamp having a plurality of control pixels whose gradations are independently controllable, and being structured to emit a beam having intensity distribution according to the gradations of the control pixels; and
a control device structured to receive, from a host vehicle, light-shielding information that indicates an existence range of a vehicle ahead, and to control the variable light distribution lamp based on the light-shielding information,
wherein the control device is structured to control the gradations of the plurality of control pixels of the variable light distribution lamp such that illuminance gradates based on a reference region, the reference region being a rectangle that encompasses n existence ranges (n ≥ 2) indicated by n pieces of light-shielding information that have been most recently received.

5. A software program for controlling a variable light distribution lamp,
the variable light distribution lamp having a plurality of control pixels whose gradations are independently controllable, and being structured to emit a beam having intensity distribution according to the gradations of the control pixels,
the software program being structured to cause a processor:
to store light-shielding information that indicates an existence range of a vehicle ahead into a memory;
to determine a light distribution pattern in which the illuminance gradates based on a rectangular reference region that contains n existence ranges indicated by predetermined n (n ≥ 2) pieces of light-shielding information received most recently; and
to control the gradations of the control pixels based on the light distribution pattern.

6. A control device for controlling a variable light distribution lamp,
the variable light distribution lamp including a plurality of control pixels whose gradations are independently controllable, and being configured to emit a beam having an intensity distribution according to the gradations of the plurality of control pixels,
wherein the control device is structured to control the variable light distribution lamp such that, when a light spot moves in a horizontal direction, a horizontal width of a light-shielding portion expands while following the light spot in the horizontal direction, and a light distribution is formed in which illuminance gradates around the light-shielding portion.
